# EUROPEAN PATENT APPLICATION

(11) **EP 4 770 179 A1**
(43) Date of publication of application: **01.07.2026**
(21) Application number: 23950011.9
(22) Date of filing: 25.08.2023
(51) Int. Cl.: H04W 24/08

(54) **COMMUNICATION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Taor, Simon Edward William
(86) International application number: PCT/CN2023/115098
(87) International publication number: WO 2025/043416

(57) **Abstract**

A communication method and apparatus, and a device and a storage medium, which belong to the technical field of mobile communications. The method is executed by a terminal device, and comprises: accessing a first subsystem in a communication system (301), wherein the communication system includes a main system and two or more sub-systems; a first sub-system is one of the two or more sub-systems; the two or more sub-systems respectively correspond to different services and/or capabilities; the main system is used for providing a shared capability and/or resource for the two or more subsystems, wherein the two or more subsystems have different synchronization configurations and/or access configurations. Provided in the solution is an access scheme in the case where a network system is divided into a plurality of sub-systems.

## Description

### TECHNICAL FIELD

The present application relates to the technical field of communications, and in particular to a communication method and apparatus, a device and a storage medium.

### BACKGROUND

In a 5G New Radio (NR) system, terminal devices first need to access network devices to synchronize with a network side, and then establish radio links with the network side.

In related art, multiple network devices (such as base stations) for access may be provided in a wireless communication system. When terminal devices are powered on but have not yet accessed the network, they may perform cell measurement, synchronization, and radio link establishment to complete random access.

### SUMMARY

Embodiments of the present application provide a communication method and apparatus, a device and a storage medium. The technical solutions are provided as follows.

In an aspect, an embodiment of the present application provides a communication method, which is performed by a terminal device and includes the following operations.

A first subsystem in a communication system is accessed. The communication system includes a master system and two or more subsystems, the first subsystem is one of the two or more subsystems, the two or more subsystems each correspond to a respective service and/or capability, and the master system is to provide common capabilities and/or resources for the two or more subsystems.

Herein, the two or more subsystems have different synchronization configurations and/or access configurations.

In an aspect, an embodiment of the present application provides a communication method, which is performed by a network device and includes the following operations.

Access of a terminal device to a first subsystem in a communication system is accepted. The communication system includes a master system and two or more subsystems the first subsystem is one of the two or more subsystems the two or more subsystems each correspond to a respective service and/or capability, and the master system is to provide common capabilities and/or resources for the two or more subsystems.

Herein, the two or more subsystems have different synchronization configurations and/or access configurations.

In another aspect, an embodiment of the present application provides a communication apparatus, which includes an accessing module.

The accessing module is configured to access a first subsystem in a communication system. The communication system includes a master system and two or more subsystems, the first subsystem is one of the two or more subsystems, the two or more subsystems each corresponds to a respective service and/or capability, and the master system is to provide common capabilities and/or resources for the two or more subsystems.

Herein, the two or more subsystems have different synchronization configurations and/or access configurations.

In another aspect, the embodiments of the application provide a communication apparatus, which includes an accessing module.

The accessing module is configured to accept access of a terminal device to a first subsystem in a communication system. The communication system includes a master system and two or more subsystems, the first subsystem is one of the two or more subsystems, the two or more subsystems each corresponds to a respective service and/or capability, and the master system is to provide common capabilities and/or resources for the two or more subsystems.

Herein, the two or more subsystems have different synchronization configurations and/or access configurations.

In another aspect, an embodiment of the present application provides a terminal, device, including a processor, a memory and a transceiver.

The memory has a computer program stored therein, and the processor executes the computer program to cause the terminal device to implement the communication method as described above.

In another aspect, an embodiment of the present application provides a network device, including a processor, a memory and a transceiver.

The memory has a computer program stored therein, and the processor executes the computer program to cause the network device to implement the communication method as described above.

In another aspect, an embodiment of the present application also provides a computer-readable storage medium, which has a computer program stored therein, and the computer is loaded and executed by a processor to implement the communication method as described above.

In yet another aspect, the present application also provides a chip, which, when operating in a communication device, causes the communication device to perform the communication method as described above.

In yet another aspect, the present application provides a computer program product, including computer instructions stored in a computer readable storage medium. A processor of the communication device reads the computer instructions from the computer-readable storage medium, and the processor executes the computer instructions to cause the communication device to perform the communication method as described above.

In yet another aspect, the present application provides a computer program, which is executed by a processor of a communication device to implement the communication method as described above.

The embodiments of the present application provide a communication scheme for wireless access, in which a network system includes a master system and two or more subsystems, and the two or more subsystems have different synchronization configurations and/or access configurations, and the terminal device can select to access a first subsystem among the two or more subsystems, thereby providing an access scheme in a case where the network system is divided into multiple subsystems.

### BRIEF DESCRIPTION OF THE DRAWINGS

FIG. 1 is a schematic diagram of architecture of a communication system provided by an embodiment of the present application.
FIG. 2 is a framework diagram of a minimized and versatile system according to the present application.
FIG. 3 is a flowchart of a communication method provided by an embodiment of the present application.
FIG. 4 is a flowchart of a communication method provided by an embodiment of the present application.
FIG. 5 is a schematic diagram of measurement related to the present application.
FIG. 6 is a flowchart of a communication method provided by an embodiment of the present application.
FIG. 7 is a block diagram of a communication apparatus provided by an embodiment of the present application.
FIG. 8 is a block diagram of a communication apparatus provided by an embodiment of the present application.
FIG. 9 is a schematic structural diagram of a communication device provided by an embodiment of the present application.

### DETAILED DESCRIPTION

In order to make the purposes, technical solutions and advantages of the present application clearer, further detailed descriptions for the implementations of the present application are provided below in conjunction with the accompanying drawings.

The network architecture and service scenarios described in embodiments of the present application are intended to more clearly describe the technical solutions of the embodiments of the present application, and do not constitute a limitation on the technical solutions provided by the embodiments of the present application. Those of ordinary skill in the art may know that with the evolution of the network architecture and emergence of new service scenarios, the technical solutions provided by the embodiments of the present application are also applicable to similar technical problems.

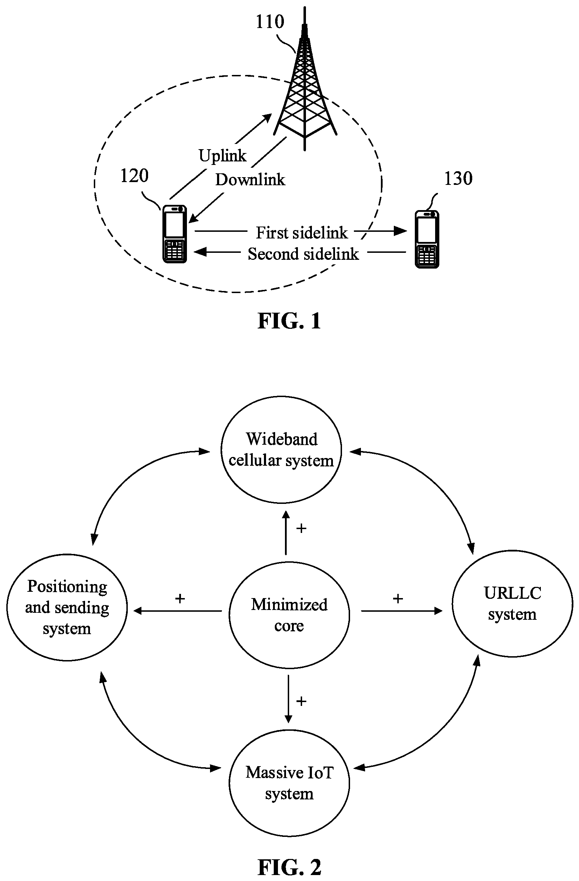

FIG. 1 is a schematic diagram of a communication system provided by an embodiment of the present application. The communication system includes a network device 110 and a terminal device 120, and/or the terminal device 120 and a terminal device 130, which is not limited in the present application.

The network device 110 in the present application provides wireless communication functions, including but not limited to: an Evolved Node B (eNB), a Radio Network Controller (RNC), a Node B (NB), a Base Station Controller (BSC), a Base Transceiver Station (BTS), a home base station (e.g., a Home Evolved Node B, or a Home Node B (HNB)), a base band unit (BBU), an Access Point (AP) in a Wireless Fidelity (Wi-Fi) system, a wireless relay node, a wireless backhaul node, a Transmission Point (TP), or a Transmission and Reception Point (TRP). The network device may also be a Next Generation Node B (gNB) or Transmission Point (TRP or TP) in a 5th Generation (5G) mobile communication system; or one or a set of antenna panels (including multiple antenna panels) of a base station in a 5G system; or may also be a network node constituting a gNB or transmission point, such as a BBU or Distributed Unit (DU), etc. Furthermore, it may be a base station in a Beyond Fifth Generation (B5G) or 6th Generation (6G) mobile communication system, or a Core Network (CN), a Fronthaul network, a Backhaul network, a Radio Access Network (RAN), or network slice. It may also refer to a serving cell, a Primary Cell (PCell), a Primary Secondary Cell (PSCell), a Special Cell (SpCell), a Secondary Cell (SCell), or a neighboring cell of a terminal device.

The terminal device 120 and/or terminal device 130 in the present application may refer to an access terminal, user equipment (UE), a subscriber unit, a subscriber station, a mobile station, a mobile platform, a remote station, a remote terminal, a mobile device, a user terminal, a terminal device, a wireless communication device, a user agent, or a user device. The terminals include, but are not limited to, handheld devices, wearable devices, in-vehicle devices and Internet of Things devices. Examples include: mobile phones, tablets, electronic book readers, laptop portable computers, desktop computers, televisions, game consoles, Mobile Internet Devices (MID), Augmented Reality (AR) terminals, Virtual Reality (VR) terminals and Mixed Reality (MR) terminals, wearable devices, handles, electronic tags, controllers, wireless terminals in Industrial Control, wireless terminals in Self Driving, wireless terminals in Remote Medical, wireless terminals in Smart Grid, wireless terminals in Smart City, wireless terminals in Smart Home, wireless terminals in Remote Medical Surgery, cellular phones, cordless phones, Session Initiation Protocol (SIP) phones, Wireless Local Loop (WLL) stations, Personal Digital Assistants (PDA), television Set-Top Boxes (STB), and Customer Premise Equipment (CPE).

The network device 110 and the terminal device 120 communicate with each other through a certain air interface technology, such as a Uu interface.

Exemplarily, there are two communication scenarios between the network device 110 and the terminal device 120, including uplink communication and downlink communication. The uplink communication is to send signals to the network device 110, and the downlink communication is to send signals to the terminal device 120.

The terminal device 120 and the terminal device 130 communicate with each other through a certain air interface technology, such as a PC5 interface.

In some embodiments, there are two communication scenarios between the terminal device 120 and the terminal device 130, including: first sidelink communication and second sidelink communication. The first sidelink communication is to send signals to the terminal device 130, and the second sidelink communication is to send signals to the terminal device 120.

The terminal device 120 and the terminal device 130 are both within the network coverage and located in the same cell; or the terminal device 120 and the terminal device 130 are both within the network coverage but located in different cells; or the terminal device 120 is within the network coverage but the terminal device 130 is outside the network coverage.

The technical solutions provided by the embodiments of the present application may be applied to various communication systems, such as a Global System of Mobile communication (GSM), a Code Division Multiple Access (CDMA) system, a Wideband Code Division Multiple Access (WCDMA) system, a General Packet Radio Service (GPRS) system, a Long Term Evolution (LTE) system, a LTE Frequency Division Duplex (FDD) System, a LTE Time Division Duplex (TDD) system, an Advanced Long Term Evolution (LTE-A) system, a Universal Mobile Telecommunication System (UMTS), a Worldwide Interoperability for Microwave Access (WiMAX) communication system, a 5G mobile communication system, a New Radio (NR) system, an evolution system of the NR system, a LTE-based access to unlicensed spectrum (LTE-U) system on unlicensed spectrum, an NR-based access to unlicensed spectrum (NR-U) system, a Terrestrial Networks (TN) system, a Non-Terrestrial Networks (NTN) system, Wireless Local Area Networks (WLAN), Wireless Fidelity (Wi-Fi), a cellular Internet of Things (IoT) system, a cellular passive IoT system. Or, the communication system may be applied to evolution systems following a 5G NR system, or B5G, 6G and it following evolution systems. In some embodiments of the present application, "NR" may also be referred to as a 5G NR system or a 5G system. The 5G mobile communication system may include Non-Standalone (NSA) and/or Standalone (SA) architectures.

The technical solutions provided by the embodiments of the present application may also be applied to Machine Type Communication (MTC), Long Term Evolution-Machine (LTE-M), Device to Device (D2D) network, Machine to Machine (M2M) network, Internet of Things (IoT) network, or other networks. The IoT network may include, for example, Internet of Vehicles. The communication modes adopted in Internet of Vehicles system are collectively referred to as Vehicle-to-Everything (V2X), where X may represent anything. For example, V2X may include: Vehicle-to-Vehicle (V2V) communication, Vehicle-to-Infrastructure (V2I) communication, Vehicle-to-Pedestrian (V2P) communication, Vehicle-to-Network (V2N) communication, and the like.

### 1) 5G

5G technology adopts New Radio (NR) design and is built on the LTE-based underlying air interface technical framework of OFDM + MIMO. Compared with LTE, it has made a lot of technical enhancements and improvements in system solution design, including: support for a wider range of frequency bands and larger carrier bandwidths, flexible frame structures, diverse numerologies, optimized reference signal design, new channel coding schemes, symbol-level resource scheduling, MIMO enhancements, reduced latency, improved coverage, enhanced mobility, UE power saving, optimized signaling design, a completely new network architecture, enhanced Quality of Service (QoS) guarantees for services, network slicing, Vehicle-to-Everything (V2X), the Industrial Internet of Things (IIoT), New Radio-unlicensed (NR-U), and robust support for various vertical industries.

Mobile Internet and mobile IoT are two main driving forces for the development of 5G and provide broad prospects for the future development of mobile communications. 5G defines three major application scenarios, including Enhanced Mobile Broadband (eMBB), Ultra-reliable and Low-latency Communication (URLLC), and massive Machine Type of Communication (mMTC). The eMBB is mainly for the mobile Internet, while URLLC and mMTC are for the mobile IoT. The mobile Internet will build a comprehensive information ecosystem centered on users. In recent years, human-centered demands, such as ultra-high-definition video, Virtual Reality (VR), Augmented Reality (AR), remote education, remote work, telemedicine, and wireless home entertainment, have become increasingly widespread. These emerging service demands inevitably propose higher requirements on transmission bandwidth and data rates in mobile communications. At the same time, vertical industries, such as mobile IoT, industrial Internet, Vehicle-to-Everything, smart grids, and smart cities, are rapidly advancing in terms of informatization and digital transformation. In addition to smart phones, mobile terminals have more diverse forms, including wearable devices, cameras, drones, robots, vehicle-mounted and ship-mounted terminal modules, industry-customized terminals.

### 2) Terminal power-saving technology

The 5G NR standard ensures extremely high network system data rates to meet the minimum performance requirements for 5G data throughput as defined by the ITU's IMT-2020. At the same time, energy consumption on the terminal side is also a critical performance requirement indicator in IMT-2020. Starting from Release16 (R16), the NR standard has begun to dedicate to power saving and optimization of terminals. In the R16 standard, power-saving signals were introduced to realize further energy saving for UEs in the RRC_CONNECTED state. These energy-saving signals are used in conjunction with the (Discontinuous Reception) DRX mechanism, and the terminal receives indication of a power-saving wake-up signal before the DRX ON duration. Release17 (R17) standard optimizes energy savings for UEs in the idle state when receiving paging messages, and similar power-saving signals are introduced. One such power-saving signal is called paging early indication (PEI), which is used to notify a UE whether it needs to receive a paging PDCCH at a target Paging Occasion (PO) before the PO arrives. Additionally, in R17, enhancements for switching of search space set groups are introduced, and a PDCCH skipping mechanism is included, which allows UE to skip PDCCH detection when necessary to save power.

### 3) Reduced capability terminals

Terminals designed in R15/R16 support extremely high peak data rates. Consequently, the capability requirements for these terminals are high, which is reflected in several key aspects:

LTE standard defines a maximum single-carrier bandwidth of 20Mhz, with larger bandwidths achieved through multi-carrier aggregation. 5G NR defines a maximum carrier bandwidth of 100MHz for frequencies below 6GHz, which is already five times that of LTE. For millimeter-wave frequencies, the maximum carrier bandwidth is 400MHz.

Due to support for flexible time-domain scheduling and frame structures, the processing speeds of terminals are relatively high. Large subcarrier spacing results in shorter time slots. All of these require terminals in NR to have significantly improved processing speeds compared to terminals in LTE.

The scale of MIMO antennas required in NR is also further improved. The antenna reference configuration for terminals in LTE is 1Tx/2Rx (1 transmit, 2 receive), while NR R15 requires a 2Tx/4Rx (2 transmit, 4 receive) antenna configuration for frequencies above 2500MHz.

NR R15/R16 also does not support half-duplex mode, and all terminals are required to operate on full-duplex mode on FDD frequencies.

As basic capabilities of NR terminals, these have higher requirements for radio frequency, baseband and other modules, significantly exceeding those of LTE. However, in terms of processing capacity and speed, such high processing capabilities are not necessary for certain application scenarios, such as the Internet of Things (IoT), industrial automation, and wearable devices. In these scenarios, communication hardware is required to have smaller volume and lower power consumption. Lightweight capability requirement is a characteristic of such terminals. Based on these considerations, NR R17 studies the introduction of Reduced Capability (RedCap) terminal standard.

The RedCap terminal standard allows reduction of certain mandatory capabilities required in NR R15/R16. Corresponding terminal functional sets are defined for such capabilities. The RedCap terminal standard further optimizes power consumption in terminal identification and access procedures, and measurements to better accommodate relevant application scenarios. In addition, the standard of compact terminals explicitly requires that such terminals do not support certain complex functional sets, such as ultra reliability and low latency, and carrier aggregation.

In R17 and R18 standards, capabilities of the RedCap terminals are defined in terms of supported bandwidth, number of antennas, half-duplex capability, measurement capabilities, relaxed processing timelines, and peak data rates.

### 4) Synchronization Signal Block in NR

The synchronization signal block (SSB) defined in 5G is used by terminals for cell search, and the SSB includes synchronization signals and a Physical Broadcast Channel (PBCH). The specific definition is as follows.

The bits carried on the PBCH include a Master Information Block (MIB) from the higher layer, totaling A bits, i.e., *a̅*₀, *a̅*₁*, a̅*₂, *a̅*₃*,* ... , *a̅*_{*A̅*-1}, and 8 bits from Layer1, i.e., *a̅_̅{̅A̅}̅*, *a̅*_{*A̅*+1}, *a̅*_{*A̅*+2}, *a̅*_{*A̅*+3}, . . . , *a̅*_{*A̅*+7} . The A bits of MIB include 6 bits for SFN, 1 bit for subcarrier spacing, 4 bits for SSB-subcarrier offset, DMRS-related information, resource information of PDCCH scheduling System Information Block (SIB), etc., and also include 1 spare bit.

For the 8 Layer1 bits *a̅_̅{̅A̅}̅, a̅*_{*A̅+*1}*, a̅*_{*A̅+*2*,*} *a̅*_{*A̅*+3}, ... *, a̅*_{*A̅+*7} *, a̅_̅{̅A̅}̅, a̅*_{*A̅+*1}*, a̅_{A̅+2},* a̅_{*̅A̅*̅+3} are the lowest 4 bits of SFN, and *a̅*_{*A̅*+4} is a half-frame indication. When *L*_{SSB} = 64 , *a̅_{A̅+5}, a̅_{A̅+6},* a̅_{A̅+7} is the highest 3 bits of SSB index, or otherwise, *a̅*_{*A̅*+5} is the highest bit of a parameter *k*_{SSB}, *a̅*_{*A̅*+6}, *a̅*_{*A̅*+7} are reserved bits. Here, *L*_{SSB} is the maximum number of SSBs, *k*_{SSB} is the subcarrier offset of SSB. When the system frequency band is less than 6GHz, i.e., *L*_{SSB} is less than 64, there are 2 reserved bits for the Layer1-related information.

Within the above MIB information, cellBarred is used to indicate an access control status of a cell, and it, together with cellReservedForOperatorUse and cellReservedForOtherUse in SIB1, are used to determine the access control status of the cell.

If cellBarred = "not barred", cellReservedForOperatorUse = "not reserved", and cellReservedForOtherUse = not "true", then cell status = "not barred". UE may consider this cell as a candidate cell for cell selection or reselection.

If cellBarred = "barred", or cellReservedForOtherUse = "true", then cell status = "barred".

If cellBarred = "not barred", cellReservedForOperatorUse = "reserved", and cellReservedForOtherUse = not "true", then UEs assigned with Access Identity 11 or 15 may consider this cell as a candidate for cell selection or reselection; and UEs assigned with Access Identity 1, 2, and 12 to 14 consider the status of this cell as "barred".

Both terminal power-saving technologies and reduced capability terminals involve reducing the functions of NR terminals as defined in R15, which achieves energy saving or lower cost for terminals at the expense of terminal performance and network performance. This is because the initial goal of NR design is large bandwidth and high speed, and thus both the network and the terminals are not specifically optimized for services with small data volumes, such as IoT services, nor was power saving of terminals considered in the initial design. Therefore, optimizing for these goals in later stages of standardization has led to increased system design complexity and performance degradation. In order to solve these problems, for design of future 6G system, the present application proposes a minimized and versatile system, which consists of a minimized core and multiple subsystems having different capability directions and different application scenarios. Under this system architecture, how terminals access the minimized core and various subsystems is a problem that needs to be solved.

Referring to FIG. 2, FIG. 2 illustrates a diagram of architecture of a minimized and versatile system according to the present application. As illustrated in FIG. 2, a communication system may include a minimized core and several subsystems. The subsystems may be activated simultaneously or may switch between each other.

In a 6G-orientated minimized and versatile system, it involves the problem of how to deploy the minimized and versatile system on the network and how the terminals accesses it. In view of this, subsequent embodiments of the present application propose a method for accessing the minimized and versatile system.

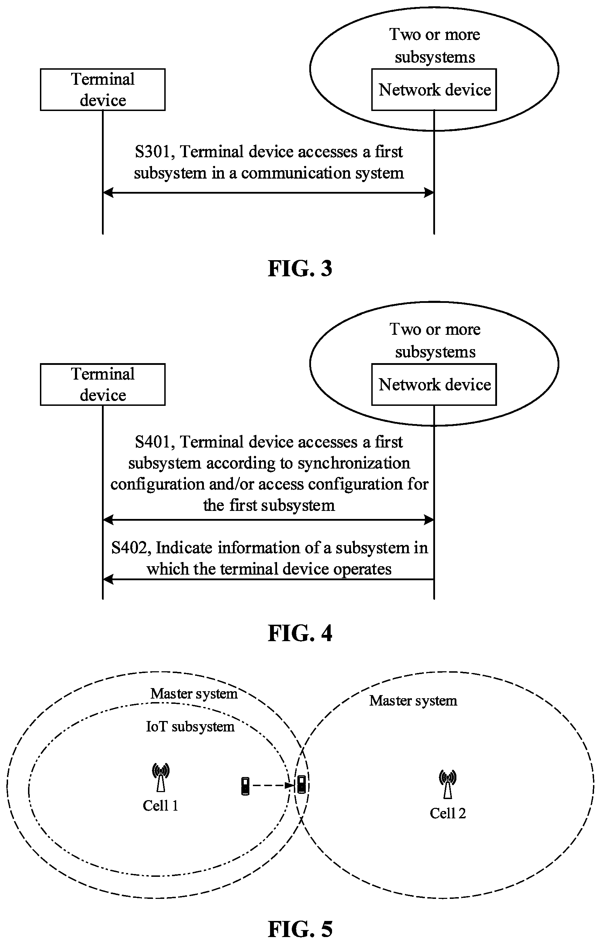

Referring to FIG. 3, FIG. 3 illustrates a flowchart of a communication method provided by an embodiment of the present application. The method may be interactively executed by a terminal device and a network device, where the terminal device may be the terminal device 120 or the terminal device 130 in the network architecture shown in FIG. 1, and the network device may be the network device 110 in the network architecture illustrated in FIG. 1. The method may include operation S301.

In S301, a terminal device accesses a first subsystem in a communication system. Correspondingly, a network device accepts access of the terminal device to the first subsystem in the communication system. The communication system includes a master system and two or more subsystems, the first subsystem is one of the two or more subsystems, the two or more subsystems correspond to different services and/or functions respectively, the master system is used to provide common and/or resources for the two or more subsystems, and the two or more subsystems have different synchronization configurations and/or access configurations.

The master system may be a 6G minimized core in FIG. 2, and the two or more subsystems may include, but are not limited to, two or more of the following: a broadband cellular subsystem, a positioning and sensing subsystem, an URLLC subsystem, and a massive IoT subsystem, in FIG. 2.

The master system is a critical part of the above communication system for realizing a minimized and versatile system. Each subsystem in the communication system needs to use the common functions and/or resources provided by the master system more or less. In order to effectively reduce the complexity and cost of each subsystem, the master system may only contain minimized common capabilities. For example, the master system may contain the following three functions/capabilities: endogenous intelligent management, security management, and flexible spectrum management.

In the embodiment of the present application, the master system may be a minimized system, which may provide certain basic services, such as access, basic data transmission, and mobility management, for terminal devices. The master system may provide a reliable basic connection for the terminals, which may realize wide coverage of the network and ensure reliability of services. It provides a system with common capabilities for terminals with different service requirements and capabilities, such as access, cell handover, inter-system handover, resource management and other functions.

On the basis of the minimized and common core corresponding to the above master system, the communication system also includes several subsystems with limited integration, to allow the communication system to be appropriately unbundled and independently optimized in various communication scenarios, thereby achieving a "minimized and versatile" communication system with "on-demand capability allocation, flexible function combination". For example, the communication system may be specifically optimized for four different capability directions, including: Clouding, Critical IoT, Ubiquitous IoT, and Sensing. In each capability direction, the communication system includes one or more subsystems. Key technologies may be independently selected according to application scenarios, spectrum, interface types, etc., to implement hardware system design separately.

For example, in the above four different capability directions, the communication system may include subsystems such as a broadband cellular subsystem, a D2D subsystem, an URLLC subsystem, a positioning and sensing subsystem, a massive IoT subsystem, an aerospace communication subsystem. The broadband cellular subsystem focuses on communication capabilities and pursues significant improvements in peak data rate, spectrum efficiency, coverage, and reliability. The D2D subsystem focuses on high connection density, mobility, and positioning accuracy. The URLLC subsystem focuses on high-reliability and low-latency data transmission. The positioning and sensing subsystem realizes sensing capabilities, captures environmental details of the physical world, and supports twin reconstruction of the virtual world. The massive IoT subsystem supports low or even extremely low power consumption, support a larger number of connections, and support diverse coverage needs. The aerospace communication subsystem focuses on achieving full coverage of the network.

Subsystems may share some hardware resources therebetween, such as antennas and processing capabilities. Subsystems choose whether to maintain air interface compatibility therebetween on demand, and determine to what extent they share the air interface technology and hardware design with the broadband cellular subsystem on demand. Optionally, a black-boxed and specialized AI algorithm library is used to replace common and complex traditional software algorithms to achieve "relative independence and individual optimization" for each subsystem and significant simplification of communication protocols. Through the switching and combination of various AI algorithms, the switching and combination of multiple subsystems can be realized.

Specifically, in the above communication system, two or more systems among the master system and the multiple subsystems may share a hardware design or may have different hardware designs, depending on similarities and differences in protocols or technologies required for the master system and the multiple subsystems to implement their respective functions. For example, in the above communication system, devices in access layer may include multiple types of base stations/access points, and there are at least some differences in protocols/technologies between different base stations/access points. For example, among the above multiple types of base stations/access points, each base station/access point may correspond to one or more cells. The one or more cells may correspond to the same system among the master system and the at least two subsystems, or the one or more cells may correspond to two or more systems among the master system and the at least two subsystems.

From the terminal device side, a terminal device may operate in a corresponding master system or subsystem according to its supported protocols/capabilities and the current service of the terminal device. For example, if the terminal device is a user's mobile phone that supports the capabilities of broadband cellular communication, D2D communication, and aerospace communication, the terminal device may operate in the broadband cellular communication subsystem or in the aerospace communication subsystem when performing a current voice call service, and may operate in the D2D communication subsystem when the terminal device performs a D2D service. For another example, if the terminal device is an IoT device that supports the positioning and sensing capability and massive IoT communication capability, the terminal device may operate in the positioning and sensing subsystem when performing positioning/sensing services, and may operate in the massive IoT communication subsystem when performing IoT communication services (such as sensor data reporting).

In the embodiment of the present application, since the master system and each subsystem may not share the hardware design/communication protocol/air interface design, the terminal needs to first access a certain subsystem to implement operations on the subsystem.

In the embodiment of the present application, the process of the terminal device accessing the first subsystem refers to a process in which the terminal device establishes a radio link with the first subsystem. Or, the process of the terminal device accessing the first subsystem refers to a process in which the terminal device establishes a radio link with a cell(s) corresponding to the first subsystem.

The process of the network device accepting access of the terminal device to the first subsystem in the communication system may refer to that the network device establishes a radio link with the terminal device through the first subsystem; or a radio link based on the first subsystem is established between the network device and the terminal device, for example, a radio link based on a cell(s) corresponding to the first subsystem is established between the network device and the terminal device.

Herein, different subsystems may have different synchronization configurations and/or access configurations, so that each terminal device may access a corresponding subsystem through its respective synchronization configuration and/or access configuration during access.

Optionally, the synchronization configuration may include a configuration related to transmission and reception of a synchronization signal(s), for indicating a transmission and reception mode of the synchronization signal(s) of a corresponding subsystem.

Optionally, the access configuration may include a random access-related configuration for indicating a random access mode of a corresponding subsystem.

Optionally, the access configuration may also include configurations for access modes other than random access. For example, for a subsystem related to a non-mobile scenario, the above access configuration may indicate the terminal device to skip the random access procedure and establish a connection with the subsystem according to a connection parameter configured in advance.

In summary, according to the scheme in the embodiment of the present application, the network system includes two or more subsystems, and the two or more subsystems have different synchronization configurations and/or access configurations, and the terminal device may select to access the first subsystem among them, thereby providing an access scheme in a case where the network system is divided into multiple subsystems.

Based on the scheme illustrated in FIG. 3, the terminal device may independently access the first subsystem. For example, during initial access, the terminal device may directly access the first subsystem according to a synchronization configuration and/or an access configuration of the first subsystem.

Referring to FIG. 4, FIG. 4 illustrates a flowchart of a communication method provided by an embodiment of the present application. The method may be interactively executed by a terminal device and a network device, where the terminal device may be the terminal device 120 or the terminal device 130 in the network architecture illustrated in FIG. 1, and the network device may be the network device 110 in the network architecture illustrated in FIG. 1. The method may include operations S401 and S402.

In S401, a terminal device accesses a first subsystem according to a synchronization configuration and/or an access configuration of the first subsystem. Correspondingly, a network device accepts access of the terminal device to the first subsystem according to the synchronization configuration and/or the access configuration of the first subsystem.

In NR, terminals obtain synchronization, receive system messages, and access cells by searching synchronization signal blocks (SSBs) in frequency bands. There is no difference in capabilities and supported functions for the cells accessed by the terminals. After terminals with different capabilities report their capabilities to a network, the network will configure corresponding resources to the terminals.

The communication system network (such as a 6G network) according to the present application include subsystems with different capability directions and corresponding terminals that orientate different capabilities/functions, and thus the UE, when accessing the 6G network, may access a corresponding network subsystem according to its supported capability/function. Specifically, a 6G terminal has multiple capability sets. The terminal may activate only a part of the capability sets to meet specific service requirements. Capabilities included in a capability set may be oriented to supporting specific services, such as eMBB, IoT, URLLC, and the like. Take the capability set corresponding to IoT as an example, it mainly involves small data packet services, and thus has low requirements for peak data rate, latency, etc., and may be relaxed in terms of supported bandwidths, the number of antennas, half-duplex capability, mobility, processing time, coding and other requirements. The hardware resources of the terminal corresponding to this capability set may be activated separately without activating all the hardware resources of the terminal, thereby achieving reduction of power consumption. For example, when an eMBB service, such as download, is established, the terminal may activate a capability set corresponding to a large bandwidth and a high peak data rate. Specifically, the capability set may also be oriented to different radio access technologies, such as NR, LTE, WCDMA, NB-IoT, MTC, GSM, Wi-Fi, and the like. For different radio access technologies, the UE may activate different capability sets. In other words, different air interface technologies may be supported for different capability sets.

In some embodiments, in a case where two or more subsystems have different synchronization configurations, synchronization signals indicated by the synchronization configurations of the two or more subsystems have different resource positions. The terminal device may search for synchronization signals for respective subsystems at different resource positions, and access a corresponding subsystem.

For example, in the embodiment of the present application, when the terminal device needs to access the first subsystem, it may receive a synchronization signal of the first subsystem at a resource position where the synchronization signal of the first subsystem is located. Correspondingly, the network device sends the synchronization signal of the first subsystem at the resource position where the synchronization signal of the first subsystem is located.

Optional, the synchronization signals indicated by the synchronization configurations of the two or more subsystems have different frequency domain resource positions.

For example, the synchronization signals of the two or more subsystems are located in different synchronization rasters, or the synchronization signals of the two or more subsystems are located in different bandwidth parts (BWPs), etc.

In NR, terminals obtain synchronization, receive system messages, and access cells by searching SSBs in the frequency band. There is no difference in capabilities and supported functions for the cells accessed by the terminals. After terminals with different capabilities report their capabilities to a network, the network will configure corresponding resources to the terminals.

In some embodiments of the present application, different subsystems correspond to cell-defining synchronization signals at different frequency domain positions. For the network side, it may provide independent access of each subsystem. Each subsystem has a corresponding synchronization signal for searching a cell(s) corresponding to the subsystem. The terminal may access a corresponding subsystem by searching for the synchronization signal. Optionally, as for the synchronization signal, the cell-defining synchronization signal specific to each subsystem may be defined with reference to the cell-defining SSB for accessing of cells in the NR.

Specifically, synchronization signals corresponding to different subsystems may be located at different frequency domain positions, for example in different synchronization rasters. For example, frequency domain positions of SS_Blocks are defined by synchronization rasters, as shown in Table 1 below. In different frequency ranges, possible frequency domain positions of the SS_Block are determined according to the formula in the table, and are numbered based on Synchronization Signal Raster Reference frequency (SSREF).

**Table 1**

| Frequency range | SS_Block frequency position | Range of SSREF |
|---|---|---|
| 0 - 2650 MHz | N*900 kHz + M*5 kHz, N = 1: [2944], M = -1: 1 | 1 - [8832] |
| 2400 - 24250 MHz | 2400 MHz +N *1.44 MHz, N = 0: [15173] | [8833-24006] |
| 24250 - 100000 MHz | [24250.08] MHz + N*[17.28] MHz, N = 0: [4383] | [24007- 28390] |

That is, in the network deployment of the communication system according to the present application, the cell search may also be implemented based on the synchronization signals located on the synchronization rasters, and the terminal may search for a synchronization signal at a respective synchronization raster.

For example, if a terminal currently needs to function as a wearable device or a sensor, it may activate a corresponding capability set to access the network as an IoT device, such as a Reduced Capability (RedCap) terminal defined in NR. The terminal searches for a synchronization signal on a synchronization raster corresponding to the IoT subsystem in the network, without the need of searching other synchronization rasters, which can reduce the latency and power consumption of cell search.

Alternatively, the synchronization signals of the two or more subsystems have different time domain resource positions.

That is, the network device may transmit synchronization signals of different subsystems at different time domain positions. For example, the network device transmits synchronization signals of different subsystems on different subframes, time slots, and/or symbols.

Alternatively, the synchronization signals of the two or more subsystems have different time-frequency resource positions.

In some embodiments, in a case where the two or more subsystems have different synchronization configurations, the synchronization configurations of the two or more subsystems indicate different synchronization signals.

Herein, different subsystems may have their own synchronization signals, and the synchronization signals of different subsystems are different from each other. In this way, after searching for/receiving a synchronization signal, the terminal device may determine a subsystem to which the synchronization signal corresponds, or determine, based on the synchronization signal, whether a corresponding subsystem is the one that is to be accessed currently.

In some embodiments, at least one of the following for the two or more subsystems may be different: synchronization signal sequences, scrambling modes of the synchronization signal sequences, or coding modes of the synchronization signal sequences.

However, the synchronization signals of the two or more subsystems being different may mean that at least one of the synchronization signal sequences, scrambling modes or coding modes for the two or more subsystems are different.

In the NR system, the sequences of primary synchronization signal (PSS) and secondary synchronization signal (SSS) within the synchronization signal are m-sequences, and the terminal may obtain a corresponding cell ID based on the PSS and SSS. The PSS in NR is a pseudo-random sequence (a BPSK modulated M sequence) of length 127, occupying 127 subcarriers (SCs) in the frequency domain. The initial values x(6), x(5), x(4), x(3), x(2), x(1), x(0) are 1, 1, 1, 0, 1, 1, 0 respectively, and then an initial sequence x(n) is obtained according to x(i+7) = (x(i+4) + x(i)) mod2 recursively. Then, based on the formula m = (n + 43 × N_ID^(2)) mod 127, the final PSS sequence is obtained by performing a cyclic shift on the initial sequence using N_ID_(2). For SSS, two polynomials are required to generate two initial sequences respectively, and then N_ID_(1) and N_ID_(2) are added respectively during cyclic shift. At this time, because N_ID_(1) is known, the SSS may be successfully detected by UE according to different values of N_ID_(2). Therefore, the UE obtains the Cell ID.

However, in the scheme according to the embodiment of the present application, different subsystems may correspond to different synchronization signals. Specifically, for example, sequences of the synchronization signals corresponding to different subsystems have different cyclic shifts, or different cell IDs are obtained according to different cyclic shifts to synchronize a range to which the cell ID belongs, and a subsystem corresponding to the cell is determined. For another example, the initial sequences x(n) of synchronization signals corresponding to different subsystems may be different. Different sequences may be generated for different systems by using different sequence generation methods, or by setting different initial values.

In some embodiments, broadcast information for the two or more subsystems are different.

Optionally, the two or more subsystems each have a respective broadcast information. For example, for any one of the two or more subsystems, the synchronization signal and broadcast information of the subsystem may be transmitted correspondingly. For example, a transmission resource for a synchronization signal of a subsystem corresponds to a transmission resource for broadcast information of the subsystem. After the terminal device searches for/receives one synchronization signal, the terminal device may determine a synchronization resource for corresponding broadcast information based on a transmission resource for the synchronization signal, and receive/analyze the broadcast information on the corresponding synchronization resource.

In some embodiments, the broadcast information is used to indicate a subsystem corresponding to a synchronization signal associated with the broadcast information.

After receiving the broadcast information, the terminal device may determine, according to the broadcast information, which subsystem the previously searched/received synchronization signal belongs to or whether the previously searched/received synchronization signal belongs to the first subsystem to be accessed, and further determine whether to synchronize with and access the subsystem.

Optionally, the broadcast information may contain information of a subsystem for indicating a corresponding synchronization signal.

For example, values of one or more fields in the broadcast information may indicate which subsystem the corresponding synchronization signal belongs to. For example, the values of the one or more fields may be an identifier or an index of the subsystem for the corresponding synchronization signal.

Alternatively, the broadcast information may implicitly indicate which subsystem the corresponding synchronization signal belongs to.

In some embodiments, synchronization signals of the two or more subsystems have independently configured synchronization signal configuration information.

The synchronization signal configuration information includes:
a transmission period for a synchronization signal, and/or a number of synchronization signal blocks within a synchronization signal set.

Herein, the synchronization signal set includes synchronization signal blocks used by a corresponding subsystem in different beam directions.

When the communication system operates in a higher frequency band, the path loss of radio signal transmission becomes larger, and coverage of radios signals is reduced. In such cases, a feasible solution is to utilize the multi-antenna system of a base station and employ a beamforming technology to form beams, so as to improve the gain of radio signals to compensate for the path loss. Beams are directional, and a narrow beam can only cover partial areas of a cell, but cannot cover all users in the cell. The base station may transmit signals using a plurality of beams in different directions, and for a certain beam, it can usually only cover UEs in the corresponding beam direction, but cannot cover the UEs in other directions.

In the communication system of the present application, common channels and signals, such as synchronization signals and broadcast channels, may need to cover the entire cell through multi-beam scanning to facilitate reception by UEs within the cell. Multi-beam transmission of synchronization signals (SS) may be realized by defining synchronization signal sets. For example, one synchronization signal set includes one or more SS blocks. One SS block is used to carry synchronization signals and broadcast channels for one beam. Optionally, one SS block may include one symbol of PSS, one symbol of SSS, and two symbols of New Radio Access Technology-Physical broadcast channels (PBCH).

In the two or more subsystems, synchronization signal configuration information for the subsystems may be different from each other, or the synchronization signal configuration information for the subsystems may not be partially different.

For example, for any two subsystems among the two or more subsystems, the transmission periods of synchronization signals and the number of synchronization signal blocks within a synchronization signal set may be different. Alternatively, for any two subsystems among the two or more subsystems, the transmission periods of synchronization signals are the same, and the numbers of synchronization signal blocks within a synchronization signal set are different. Alternatively, for any two subsystems among the two or more subsystems, the transmission periods of synchronization signals are different, and the numbers of synchronization signal blocks within a synchronization signal set are the same.

Alternatively, in the two or more subsystems, synchronization signal configuration information of a part of the subsystems are the same, and are different from the synchronization signal configuration information of another part of the subsystems. For example, it is assumed that there are four subsystems in the communication system, namely, subsystem 1, subsystem 2, subsystem 3, and subsystem 4. The synchronization signal configuration information of subsystem 1 and subsystem 2 is synchronization signal configuration information 1, and the synchronization signal configuration information of subsystem 3 and subsystem 4 is synchronization signal configuration information 2. At least one of synchronization signal configuration information 1 or synchronization signal configuration information 2 is different.

Herein, the synchronization signal corresponding to a subsystem may be independently set, such as a default transmission period of the synchronization signal, the number of synchronization signals included in a synchronization signal set, for example the number of SSBs included in one SSB burst in NR, each SSB corresponding to one beam. For the IoT subsystem, in a certain frequency band, the maximum number of specific synchronization signals may be set by default. For example, the IoT subsystem may be configured with a smaller maximum number of synchronization signals compared to the eMBB subsystem.

In some embodiments, the terminal device may further acquire, through the first subsystem, subsystem configuration information of subsystems, other than the first subsystem, in the communication system, and/or the terminal device may further acquire, through the first subsystem, master system configuration information of the master system in the communication system. Correspondingly, the network device sends subsystem configuration information of other subsystems, excluding the first subsystem, in the communication system to the terminal device through the first subsystem, and/or sends the master system configuration information to the terminal device.

After the terminal device accesses the first subsystem, the terminal device may communicate with the network device through the first subsystem. At this time, the network device may send the subsystem configuration information of the other subsystems and/or the master system configuration information to the terminal device. Optionally, after acquiring the subsystem configuration information of the other subsystems and/or the master system configuration information, the terminal device may perform corresponding operations, such as measuring the other subsystems and/or the master system, accessing the other subsystems and/or the master system, switching to the other subsystems and/or the master system.

For example, the terminal device may receive subsystem configuration information of the above other subsystems and/or master system configuration information that is sent by the network device through RRC signaling.

In some embodiments, the subsystem configuration information or the master system configuration information includes one or more of the following:
cell identity (ID), initial BWP, and system message.

Optionally, when the terminal accesses a subsystem, it may obtain, through the subsystem, configuration information of other subsystems or the master system, including cell ID, initial BWP, system messages, and the like.

In some embodiments, the communication system further includes a master system (e.g., the minimized core as described above), and the terminal device, while maintaining the connection with the first subsystem, may also access the master system and/or access one or more subsystems other than the first subsystem. Correspondingly, while the the terminal device maintains the connection with the first subsystem, the network device accepts access of the terminal device to the master system and/or accepts the access of the one or more subsystems other than the first subsystem.

In the above embodiments, the terminal device may simultaneously access the master system in the communication network and a plurality of systems in the one or more subsystems.

Specifically, the terminal may also support simultaneous connection of the plurality of subsystems or the master system and a subsystem, for example, by means of Dual Connectivity, and operate on both the master system and the subsystem(s) at the same time. The connection may be implemented during the initial access, for example, the terminal may perform cell search and access for each subsystem or the master system and the subsystem respectively. A new connection may also be established after the terminal has accessed the subsystem or the master system, for example, through RRC signaling from a network, to establish dual connections or multiple connections. At this time, the terminal may operate independently in different subsystems, and for the network, it may configure the same UE ID for terminals operating in different subsystems, or different UE IDs may be configured respectively.

In S402, the terminal device receives information of a subsystem in which the terminal device operates indicated by the network device. Correspondingly, the network device indicates to the terminal device the information of the subsystem in which the terminal device operates.

For example, the network device may indicate to the terminal device information of a subsystem in which the terminal device operates through RRC signaling.

During the initial access, the terminal device may access a certain subsystem or the master system in the network system. After the connection is established, the terminal device may perform switching of the subsystem in which the terminal device operates according to the indication from the network device.

Optionally, the information of the subsystem in which the terminal device operates includes one or more of the following information:
BWP corresponding to a subsystem; and
configuration parameters for BWP.

In some embodiments, the subsystem in which the terminal device operates is determined by the network device based on at least one of the following information:
a service type of RRC connection established between the terminal device and a network;
a radio bearer established between the terminal device and a network; or
parameters of the radio bearer.

During initial access, such as when accessing the master system or minimized core in the network, or when accessing a certain subsystem, the terminal may determine, when establishing an RRC connection with the network, a subsystem in which the terminal operates according to the service type of an RRC connection established, a radio bearer established and parameters of the radio bearer. The network may indicate the information of the subsystem in which the terminal operates, for example BWP corresponding to the subsystem, and configuration parameters of the BWP, such as subcarrier spacing, cyclic prefix (CP) length, number of antennas, half-duplex capability, mobility, processing time, coding and modulation mode, measurement capability, air interface technology, basic parameter set, receiver architecture, receiver type, receiver capability, maximum transmit power, and supported features. The supported features are for example coverage enhancement feature.

In some embodiments, there is a correspondence between the subsystem in which the terminal device operates and a radio bearer.

In some embodiments, when the radio bearer between the terminal device and the network device changes, the terminal device may receive a first switching indication sent by the network device, and perform switching of the subsystem in which the terminal device operates based on the first switching indication. Correspondingly, when the radio bearer between the terminal device and the network device changes, the network device may send the first switching indication to the terminal device. The first switching indication is used to indicate the subsystem in which a switched terminal device operates.

After the RRC connection is established, as the Radio Bearer (RB), for example a signaling RB or a data RB, established between the terminal and the network change, the subsystem in which the terminal operates may change accordingly. The network may perform switching of the subsystem in which the terminal operates according to indication information. That is, when the network establishes a corresponding RB, the RB has a correspondence with the subsystem in which the terminal operates.

When the radio bearer between the terminal device and the network device is switched from a first radio bearer to a second radio bearer, the network device sends a first switching indication to the terminal device, and the terminal device receives the first switching indication from the network device. The first radio bearer corresponds to a second subsystem, and the second radio bearer corresponds to a third subsystem. Based on the first switching indication, the network device and/or the terminal device may switch the subsystem in which the terminal device operates from the second subsystem to the third subsystem.

For example, after a terminal device accesses the first subsystem, the network device may establish a radio bearer corresponding to the terminal device in the master system or in other subsystems other than the first subsystem. For example, the network device establishes a corresponding radio bearer according to the type of services to be established with the terminal device, and switches the radio bearer of the terminal device to a newly established radio bearer. In some embodiments of the present application, the configuration of the radio bearer may have association with a certain subsystem, and after a new radio bearer is established, the network device may trigger switching to a corresponding subsystem.

In some embodiments, the terminal device receiving the information of the subsystem in which the terminal device operates indicated by the network device, includes that the terminal device receives the information of the subsystem in which the terminal device operates indicated by the network device through the parameters in the radio bearer between the terminal device and the network device. Correspondingly, the network device sending the first switching indication to the terminal device includes that: the network device indicates to the terminal device the information of the subsystem in which the terminal device operates through the parameters in the radio bearer between the terminal device and the network device.

Herein, the network may indicate the subsystem in which the terminal operates and related configuration information in the corresponding parameters of the radio bearer. The related configuration information includes, for example, a specific transmission resource or transmission resource configuration, such as long transport channel (LCH) configuration, carrier configuration, Medium Access Control (MAC) configuration, Physical Uplink shared channel (PUSCH) resources.

In some embodiments, when there is a service establishment requirement for the terminal device, the terminal device may send a service establishment request to the network device. The service establishment request is used for the network device to perform switching of the subsystem in which the terminal device operates based on a service(s) requested to be established by the service establishment request. Correspondingly, when there is a service establishment requirement for the terminal device, the network device receives the service establishment request sent by the terminal device, and performs switching of the subsystem in which the terminal device operates based on the service(s) requested to be established by the service establishment request.

In some embodiments, the terminal device indicating the service establishment requirement to the network device, includes:
sending the service establishment request to the network device through a non-access stratum (NAS) signaling;
sending the service establishment request to the network device through a protocol data unit (PDU) session setup signaling;
sending the service establishment request to the network device during a PDU session setup procedure;
sending the service establishment request to the network device through a PDU session modification signaling; and
sending the service establishment request to the network device during a PDU session modification procedure.

Correspondingly, the network device receiving the service establishment requirement indicated by the terminal device includes:
receiving the service establishment request sent by terminal device through an NAS signaling;
receiving the service establishment request sent by terminal device through a PDU session setup signaling;
receiving the service establishment request sent by terminal device in a PDU session setup procedure;
receiving the service establishment request sent by terminal device through a PDU session modification signaling; and
receiving the service establishment request sent by terminal device in a PDU session modification procedure.

Specifically, for example, when the terminal has a service establishment requirement, it may indicate to the network (for example, by sending the above service establishment request) through NAS signaling (for example, in service request signaling), through PDU session establishment signaling or in the PDU session establishment procedure, or through PDU session modification signaling or in PDU session modification procedure, which may be used as auxiliary information for the network to decide to perform switching of the corresponding subsystem.

In some embodiments, the terminal device may further perform switching of the subsystem in which the terminal device operates according to a connection status of the terminal device.

In some embodiments, the connection status includes an idle state, an inactive state, or a connected state.

In some embodiments, the terminal device may further activate a capability set of the terminal device according to a switched subsystem in which the terminal device operates.

Specifically, for example, when the terminal is in different states, the subsystem in which the terminal operates is switched. For example, when the terminal is in an idle or inactive state, it may be in a low-capability and power-saving state, and may operate in a corresponding subsystem. In this subsystem, certain latency requirements for connection establishment and state transitions are satisfied. When the terminal is in the connected state, the terminal may switch to a corresponding subsystem according to the established service. When performing subsystem switching, the terminal may activate a corresponding capability set automatically. For example, when switching to an idle or inactive state, the terminal may switch to a default capability set for operation. When switching to the connected state, the terminal may switch to a corresponding capability set.

In some embodiments, there is a correspondence between the subsystem in which the terminal device operates and a BWP.

In some embodiments, the correspondence between the subsystem in which the terminal device operates and the BWP is determined by the capability set of the terminal device.

Specifically, the network may configure BWPs corresponding to multiple subsystems for the terminal. The configuring BWPs corresponding to which subsystems for the terminal may be determined according to the capability set reported by the terminal. For example, when the terminal reports an IoT-related capability set and an eMBB-related capability set, considering the subsystems in which the terminal may operate, the network may configure BWPs corresponding to the IoT subsystem and BWPs corresponding to the eMBB subsystem for the terminal.

In some embodiments, when BWP switching for the terminal device occurs, the terminal device or the network device may switch the subsystem in which the terminal device operates to a subsystem corresponding to a new BWP.

In some embodiments, the BWP switching for the terminal device is indicated by the network device through an RRC signaling, an MAC layer signaling, or a physical layer signaling. Alternatively, the BWP switching for the terminal device is performed by the terminal device according to a specified trigger condition.

When a terminal switches to a corresponding BWP, the subsystem in which the terminal operates is also switched accordingly. Specifically, the BWP switching may be indicated through an RRC signaling, an MAC layer signaling, or a physical layer signaling. Alternatively, the BWP switching is performed based on a certain rule. For example, in NR, the network configures the ID of a default BWP for the terminal through defaultDownlinkBWP-ID information, or it configures a dormant DL BWP for the terminal. These types of BWPs are designed to achieve power saving of terminals when there is no data scheduling. When the terminal determines, based on a timer, that it needs to switch to these types of BWPs, the terminal may activate/switch to a subsystem corresponding to that type of BWP. When switching to other types of BWPs, it may activate or switch to other subsystems.

In some embodiments, when the terminal device performs mobility measurement, a first cell corresponding to the second subsystem, a second cell corresponding to the second subsystem, and a third cell corresponding to the master system in the communication system are measured by the terminal device. Herein, the second subsystem is a subsystem in which the terminal device operates, the first cell is a cell currently accessed by the terminal device, and the second cell and the third cell are neighboring cells of the first cell.

Although the network may support multiple subsystems, when a terminal accesses a certain subsystem in a cell through cell search, cell handover due to the mobility of the terminal should also be considered. The subsystems may not necessarily provide continuous coverage and might only be covered in some hotspot areas. When cell handover or reselection is required, the terminal may be allowed to switch to other subsystems in other cells, for example, to switch to a master system in another cell. Here, it is assumed that the master system provides continuous coverage to meet the requirements of wide network coverage and terminal mobility.

Specifically, the mobility measurement for the terminal may measure not only signals from corresponding subsystems in neighboring cells of a cell where a currently operating subsystem is located, but also measure signals from other subsystems, for example signals from a master system, in the neighboring cell.

Referring to FIG. 5, FIG. 5 illustrates a schematic diagram of measurement according to the present application. As illustrated in FIG. 5, a terminal operates in an IoT subsystem in a cell 1, and the terminal moves from the cell 1 to a cell 2. According to the mobility measurement result of the cell 2 performed by the terminal, there is not a corresponding IoT subsystem in the cell 2, but there is a master system in the cell 2. Then, the terminal switches to the cell 2 and operates in the master system of the cell 2.

According to the scheme illustrated in FIG. 3, the communication system further includes a master system, and the terminal device may access the first subsystem through the master system.

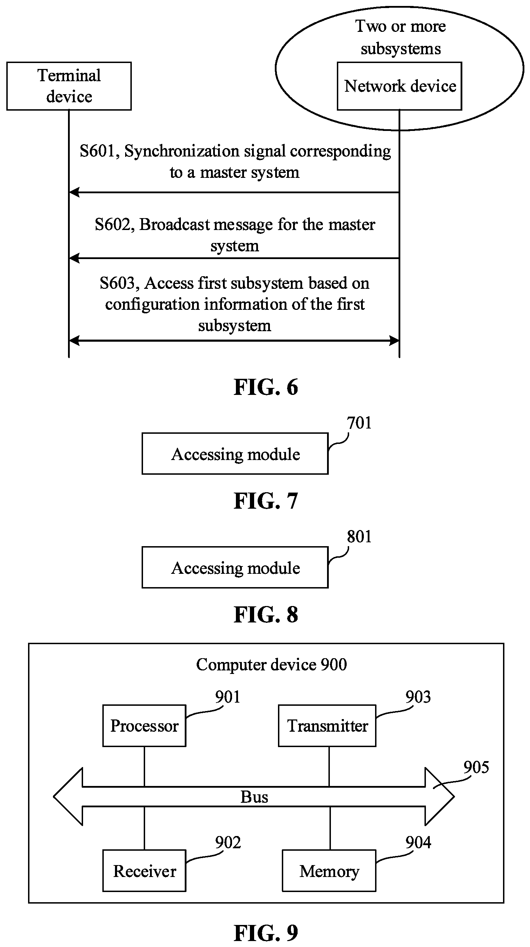

Referring to FIG. 6, FIG. 6 illustrates a flowchart of a communication method provided by an embodiment of the present application. The method may be interactively executed by a terminal device and a network device, where the terminal device may be the terminal device 120 or the terminal device 130 in the network architecture illustrated in FIG. 1, and the network device may be the network device 110 in the network architecture illustrated in FIG. 1. The method may include operations S601, S602 and S603.

In S601, the network device sends a synchronization signal corresponding to a master system, and the terminal device receives the synchronization signal corresponding to the master system.

In the embodiment, the network side may deploy a unified synchronization signal for the terminal device to perform cell search. Through this synchronization signal, the terminal device may access the master system, or the minimized core as described above.

In S602, the network device sends a broadcast message of the master system. Accordingly, the terminal device receives the broadcast message of the master system after it synchronizes with the master system according to a synchronization signal corresponding to the master system. The broadcast message of the master system includes configuration information of one or more subsystems in the communication system, and the one or more subsystems include the first subsystem.

After the synchronization is completed, MIB information and a system message are received. The system message may indicate subsystems associated with the master system and configuration information related to the subsystems, such as system messages corresponding to each of the subsystems. After obtaining the system message for a corresponding subsystem, the terminal may perform a corresponding access procedure to access a target subsystem.

In S603, the terminal device accesses the first subsystem based on the configuration information of the first subsystem. Correspondingly, the network device accepts access of the terminal device to the first subsystem in the communication system based on the configuration information of the first subsystem.

In some embodiments, in a case where the two or more subsystems have different access configurations, configuration information of the one or more subsystems includes random access configuration information of the one or more subsystems.

In some embodiments, one or more of the following information in the random access configuration information of one or more subsystems is different:
a time domain position of a random access channel (PRACH);
a frequency domain position of the PRACH; and
a random access preamble.

The above scheme can simplify the cell search process of the terminal. The terminal only needs to search for a synchronization signal corresponding to the master system, and acquire the configuration information of subsystems from the obtained system message, thereby accessing a corresponding subsystem. Specifically, the configuration information of the subsystems may include random access configuration information corresponding to each of the subsystems, including time domain, frequency domain, and preamble resources of the random access channel PRACH, which are used for the terminal to perform random access. The random access configuration information corresponding to different subsystems may be different in one or more of the time domain, the frequency domain, or the preamble of the PRACH, so that the network determines the subsystem to which the terminal accesses according to the PRACH sent by the terminal. Specifically, the configuration information of the subsystems may include that initial BWPs corresponding to the subsystems are different. In this case, terminals accessing different subsystems may send PRACHs in corresponding initial uplink BWPs, and receive random access response information in corresponding initial downlink BWPs.

In some embodiments, the subsystem in which the terminal device operates is determined by the network device based on at least one of the following information:
a service type of RRC connection established between the terminal device and a network;
a radio bearer established between the terminal device and the network; or
parameters of the radio bearer.

In some embodiments, there is a correspondence between the subsystem in which the terminal device operates and a radio bearer.

In some embodiments, when a radio bearer between the terminal device and the network device changes, the terminal device may receive a first switching indication sent by the network device, and performs switching of the subsystem in which the terminal device operates based on the first switching indication. Correspondingly, when the radio bearer between the terminal device and the network device changes, the network device may send a first switching indication to the terminal device. The first switching indication is used to indicate the subsystem in which a switched terminal device operates.

In some embodiments, when the radio bearer between the terminal device and the network device is switched from a first radio bearer to a second radio bearer, the network device sends a first switching indication to the terminal device, and the terminal device receives the first switching indication from the network device. The first radio bearer corresponds to a second subsystem, and the second radio bearer corresponds to a third subsystem. Based on the first switching indication, the network device and/or the terminal device may switch the subsystem in which the terminal device operates from the second subsystem to the third subsystem.

In some embodiments, the terminal device receiving information of the subsystem in which the terminal device operates indicated by the network device, includes that the terminal device receives the information of the subsystem in which the terminal device operates indicated by the network device through the parameters in the radio bearer between the terminal device and the network device. Correspondingly, the network device sending the first switching indication to the terminal device, includes that the network device indicates to the terminal device the information of the subsystem in which the terminal device operates through the parameters in the radio bearer between the terminal device and the network device.

In some embodiments, when there is a service establishment requirement for the terminal device, the terminal device may send a service establishment request to the network device. The service establishment request is used for the network device to perform switching of the subsystem in which the terminal device operates based on a service(s) requested to be established by the service establishment request. Correspondingly, when there is a service establishment requirement for the terminal device, the network device receives the service establishment request sent by the terminal device, and performs switching of the subsystem in which the terminal device operates based on the service(s) requested to be established by the service establishment request.

In some embodiments, the terminal device indicating the service establishment requirement to the network device, includes:
sending the service establishment request to the network device through a non-access stratum (NAS) signaling;
sending the service establishment request to the network device through a protocol data unit (PDU) session setup signaling;
sending the service establishment request to the network device during a PDU session setup procedure;
sending the service establishment request to the network device through a PDU session modification signaling;
sending the service establishment request to the network device during a PDU session modification procedure.

Correspondingly, the network device receiving the service establishment requirement indicated by the terminal device includes:
receiving the service establishment request sent by terminal device through an NAS signaling;
receiving the service establishment request sent by terminal device through a PDU session setup signaling;
receiving the service establishment request sent by terminal device during a PDU session setup procedure;
receiving the service establishment request sent by terminal device through a PDU session modification signaling;
receiving the service establishment request sent by terminal device in a PDU session modification procedure.

In some embodiments, the terminal device may further perform switching of the subsystem in which the terminal device operates according to a connection status of the terminal device.

In some embodiments, the connection status includes an idle state, an inactive state, or a connected state.

In some embodiments, the terminal device may further activate a capability set of the terminal device according to a switched subsystem in which the terminal device operates.

In some embodiments, there is a correspondence between the subsystem in which the terminal device operates and a BWP.

In some embodiments, the correspondence between the subsystem in which the terminal device operates and the BWP is determined by the capability set of the terminal device.

In some embodiments, when BWP switching for the terminal device occurs, the terminal device or the network device may switch the subsystem in which the terminal device operates to a subsystem corresponding to a new BWP.

In some embodiments, the BWP switching for the terminal device is indicated by the network device through an RRC signaling, an MAC layer signaling, or a physical layer signaling. Alternatively, the BWP switching for the terminal device is performed by the terminal device according to a specified trigger condition.

In some embodiments, when performing mobility measurement, the terminal device measures the following: a first cell corresponding to the second subsystem, a second cell corresponding to the second subsystem, and a third cell corresponding to the master system in the communication system. Herein, the second subsystem is a subsystem in which the terminal device operates, the first cell is a cell currently accessed by the terminal device, and the second cell and the third cell are neighboring cells of the first cell.

In some embodiments, the terminal device may also access the master system and/or access one or more subsystems other than the first subsystem while maintaining the connection with the first subsystem. Correspondingly, while the the terminal device maintains the connection with the first subsystem, the network device accepts access of the terminal device to the master system and/or accepts the access of the one or more subsystems other than the first subsystem.

According to the solution in the above embodiments of the present application, in a network where multiple subsystems are deployed, the terminal may be enabled to complete cell search for the corresponding subsystem, thereby accessing the network with multiple subsystems. In this way, the latency and complexity of cell search can be simplified. The solution in the above embodiments of the present application further provides a method of subsystem switching, including subsystem switching after the establishment of connection with a network, and subsystem switching in the case of cell handover or re-selection, which realizes power saving of terminals, efficient utilization of network resources, and reliable terminal switching.

Referring to FIG. 7, FIG. 7 is a block diagram of a communication apparatus provided by an embodiment of the present application. The communication apparatus possesses functions executed by the terminal device in implementing the method shown in FIG. 3, FIG. 4, or FIG. 6. As illustrated in FIG. 7, the apparatus includes an accessing module 701.

The accessing module 701 is configured to access a first subsystem in a communication system, where the communication system includes a master system and two or more subsystems, the first subsystem is one of the two or more subsystems, the two or more subsystems each corresponds to a respective service and/or capability, and the master system is to provide common capabilities and/or resources for the two or more subsystems.

Herein, the two or more subsystems have different synchronization configurations and/or access configurations.

In some embodiments, in a case where the two or more subsystems have different synchronization configurations, synchronization signals indicated by the synchronization configurations of the two or more subsystems have different resource positions.

In some embodiments, the synchronization signals indicated by the synchronization configurations of the two or more subsystems have different frequency domain resource positions.

In some embodiments, the accessing module 701 is configured to receive the synchronization signal of the first subsystem at a resource position of the synchronization signal for the first subsystem.

In some embodiments, in a case where the two or more subsystems have different synchronization configurations, the synchronization configurations of the two or more subsystems indicate different synchronization signals.

In some embodiments, at least one of the following may be different for the two or more subsystems: synchronization signal sequences, scrambling modes of the synchronization signal sequences, or coding modes of the synchronization signal sequences.

In some embodiments, broadcast information for the two or more subsystems are different.

In some embodiments, the broadcast information is used to indicate a subsystem corresponding to a synchronization signal associated with the broadcast information.

In some embodiments, synchronization signals of the two or more subsystems have independently configured synchronization signal configuration information.

The synchronization signal configuration information includes:
a transmission period of a synchronization signal, and/or a number of synchronization signal blocks in a synchronization signal set.

Herein, the synchronization signal set includes synchronization signal blocks used by a corresponding subsystem in different beam directions.

In some embodiments, the apparatus further includes a configuration information acquisition module, configured to acquire, through the first subsystem, subsystem configuration information of other subsystems in the communication system other than the first subsystem.

In some embodiments, the subsystem configuration information includes one or more of the following:
a cell ID, an initial BWP, and a system message.

In some embodiments, the accessing module 701 is configured to: receive a synchronization signal corresponding to the master system; receive a broadcast message of the master system, after synchronizing with the master system according to a synchronization signal corresponding to the master system, where the broadcast message of the master system includes configuration information of one or more subsystems in the communication system, and the one or more subsystems includes the first subsystem; and
access the first subsystem based on the configuration information of the first subsystem.

In some embodiments, in a case where two or more subsystems have different access configurations, configuration information of the one or more subsystems includes random access configuration information of the one or more subsystems.

In some embodiments, one or more of the following information in the random access configuration information of the one or more subsystems is different:
a time domain position of a random access channel (PRACH);
a frequency domain position of the PRACH; and
a random access preamble.

In some embodiments, the subsystem in which the terminal device operates is determined by the network device based on at least one of the following information:
a service type of an RRC connection established between the terminal device and a network;
a radio bearer established between the terminal device and a network; or
parameters of the radio bearer.

In some implementations, the apparatus further includes a receiving module.

The receiving module is configured to receive information of a subsystem in which the terminal device operates that is indicated by the network device.

The information of the subsystem in which the terminal device operates includes one or more of the following:
BWP corresponding to the subsystem; and
configuration parameters for BWP.

In some embodiments, there is a correspondence between the subsystem in which the terminal device operates and a radio bearer.

In some embodiments, the receiving module is configured to receive a first switching indication from the network device in a case where the radio bearer between the terminal device and the network device changes.

The apparatus further includes a switching module.

The switching module is configured to perform switching of the subsystem in which the terminal device operates based on the first switching indication.

In some embodiments, the operation of receiving the first switching indication from the network device in a case where the radio bearer between the terminal device and the network device changes includes:
receiving the first switching indication from the network device in a case where the radio bearer between the terminal device and the network device is switched from a first radio bearer to a second radio bearer, where the first radio bearer corresponds to a second subsystem, and the second radio bearer corresponds to a third subsystem.

The switching module is configured to switch the subsystem in which the terminal device operates from the second subsystem to the third subsystem based on the first switching indication.

In some embodiments, the receiving module is configured to receive the information of the subsystem in which the terminal device operates that is indicated by the network device using a parameter in the radio bearer between the terminal device and the network device.

In some implementations, the apparatus further includes a request sending module.

The request sending module is configured to send a service establishment request to the network device, where the service establishment request is used for the network device to perform switching of the subsystem in which the terminal device operates based on a service requested to be established by the service establishment request.

In some embodiments, the request sending module is configured to:
send the service establishment request to the network device through an NAS signaling;
send the service establishment request to the network device through a PDU session setup signaling;
send the service establishment request to the network device during a PDU session setup procedure;
send the service establishment request to the network device through a PDU session modification signaling;
send the service establishment request to the network device in a PDU session modification procedure.

In some embodiments, the switching module is configured to perform switching of the subsystem in which the terminal device operates according to a connection status of the terminal device.

In some embodiments, the connection status includes an idle state, an inactive state, or a connected state.

In some implementations, the apparatus further includes an activation module.

The activation module is configured to activate a capability set of the terminal device according to a switched subsystem in which the terminal device operates.

In some embodiments, there is a correspondence between the subsystem in which the terminal device operates and a BWP.

In some embodiments, the correspondence between the subsystem in which the terminal device operates and the BWP is determined by the capability set of the terminal device.

In some embodiments, the switching module is configured to switch the subsystem in which the terminal device operates to a subsystem corresponding to a new BWP in a case where BWP switching for the terminal device occurs.

In some embodiments, the BWP switching for the terminal device is indicated by the network device through an RRC signaling, an MAC layer signaling, or a physical layer signaling;
or, the BWP switching for the terminal device is performed by the terminal device according to a specified trigger condition.

In some implementations, the apparatus further includes a measurement module.

The measurement module is configured to measure, during mobility measurement, one or more cells of: a first cell corresponding to a second subsystem, a second cell corresponding to the second subsystem, and a third cell corresponding to the master system in the communication system.

The second subsystem is a subsystem in which the terminal device operates, the first cell is a cell currently accessed by the terminal device, and the second cell and the third cell are neighboring cells of the first cell.

In some embodiments, the accessing module is further configured to access the master system and/or access one or more subsystems other than the first subsystem while maintaining connection with the first subsystem.

Referring to FIG. 8, FIG. 8 is a block diagram of a communication apparatus provided by an embodiment of the present application. The communication apparatus possesses functions performed by the network device in implementing the method shown in FIG. 3, FIG. 4, or FIG. 6 as described above. As illustrated in FIG. 8, the apparatus includes an accessing module 801.

The accessing module 801 is configured to accept access of the terminal device to a first subsystem in a communication system, where the communication system includes a master system and two or more subsystems, the first subsystem is one of the two or more subsystems, the two or more subsystems each corresponds to a respective service and/or capability and the master system is to provide common capabilities and/or resources for the two or more subsystems.

Herein, the two or more subsystems have different synchronization configurations and/or access configurations.

In some embodiments, in a case where the two or more subsystems have different synchronization configurations, synchronization signals indicated by the synchronization configurations of the two or more subsystems have different resource positions.

In some embodiments, the synchronization signals of the two or more subsystems have different frequency domain resource positions.

In some embodiments, the accessing module 801 is configured to send the synchronization signal of the first subsystem at a resource position of the synchronization signal for the first subsystem.

In some embodiments, in a case where the two or more subsystems have different synchronization configurations, the synchronization configurations of the two or more subsystems indicate different synchronization signals.

In some embodiments, at least one of the following may be different for the two or more subsystems: synchronization signal sequences, scrambling modes of the synchronization signal sequences, or coding modes of the synchronization signal sequences.

In some embodiments, broadcast information for the two or more subsystems are different.

In some embodiments, the broadcast information is used to indicate a subsystem corresponding to a synchronization signal associated with the broadcast information.

In some embodiments, synchronization signals of the two or more subsystems have independently configured synchronization signal configuration information.

The synchronization signal configuration information includes: a transmission period of a synchronization signal, and/or a number of synchronization signal blocks in a synchronization signal set.

Herein, the synchronization signal set includes synchronization signal blocks used by a corresponding subsystem in different beam directions.

In some embodiments, the apparatus further includes a first sending module, configured to send, through the first subsystem, subsystem configuration information of other subsystems in the communication system other than the first subsystem to the terminal device.

In some embodiments, the subsystem configuration information includes one or more of a cell ID, an initial BWP, and a system message.

In some embodiments, the communication system further includes a master system, and the accessing module 801 is configured to:
send a synchronization signal corresponding to the master system and a broadcast message for the master system, where the broadcast message for the master system comprises configuration information of one or more subsystems in the communication system, and the one or more subsystems comprise the first subsystem; and
accept access of the terminal device to the first subsystem based on the configuration information of the first subsystem.

In some embodiments, in a case where the two or more subsystems have different access configurations, the configuration information of the one or more subsystems includes random access configuration information of the one or more subsystems.

In some embodiments, one or more of the following information in the random access configuration information of the one or more subsystems is different:
a time domain position of a random access channel (PRACH);
a frequency domain position of the PRACH; and
a random access preamble.

In some embodiments, the subsystem in which the terminal device operates is determined by the network device based on at least one of the following information:
a service type of an RRC connection established between the terminal device and a network;
a radio bearer established between the terminal device and a network; or
parameters of the radio bearer.

In some embodiments, the apparatus further includes: a second sending module configured to indicate to the terminal device information of a subsystem in which the terminal device operates. The information of the subsystem in which the terminal device operates includes one or more of the following:
BWP corresponding to the subsystem; and
configuration parameters for BWP.

In some embodiments, there is a correspondence between the subsystem in which the terminal device operates and a radio bearer.

In some implementations, the apparatus further includes a third sending module.

The third sending module is configured to send a first switching indication to the terminal device in a case where the radio bearer between the terminal device and the network device changes, where the first switching indication is used to indicate performing switching of the subsystem in which the terminal device operates.

In some embodiments, the third sending module is configured to send the first switching indication to the terminal device in a case where the radio bearer between the terminal device and the network device is switched from a first radio bearer to a second radio bearer. The first radio bearer corresponds to a second subsystem, the second radio bearer corresponds to a third subsystem, and the first switching indication is used for indicating the terminal device to switch the subsystem in which it operates from the second subsystem to the third subsystem.

In some embodiments, the second sending module is configured to indicate to the terminal device the information of the subsystem in which the terminal device operates through parameters in the radio bearer between the terminal device and the network device.

In some implementations, the apparatus further includes a receiving module.

The receiving module is configured to receive a service establishment request sent by the terminal device.

The first switching module is configured to perform switching of the subsystem in which the terminal device operates based on a service that is requested to be established by the service establishment request.

In some embodiments, the receiving module is configured to:
receive the service establishment request that is sent by the terminal device through an NAS signaling;
receive the service establishment request that is sent by the terminal device through a PDU session setup signaling;
receive the service establishment request that is sent by the terminal device during a PDU session setup procedure;
receive the service establishment request sent by the terminal device through PDU session modification signaling;
receive the service establishment request sent by the terminal device during a PDU session modification procedure.

In some embodiments, there is a correspondence between the subsystem in which the terminal device operates and a BWP.

In some embodiments, the correspondence between the subsystem in which the terminal device operates and the BWP is determined by the capability set of the terminal device.

In some embodiments, the apparatus further includes a second switching module configured to switch the subsystem in which the terminal device operates to a subsystem corresponding to a new BWP in a case where BWP switching for the terminal device occurs.

In some embodiments, the BWP switching for the terminal device is indicated by the network device through an RRC signaling, an MAC layer signaling, or a physical layer signaling;
or, the BWP switching for the terminal device is performed by the terminal device according to a specified trigger condition.

In some embodiments, the accessing module 801 is further configured to accept access of the terminal device to the master system and/or accept access of the terminal device to one or more subsystems other than the first subsystem, in a case where the terminal device maintains a connection with the first subsystem.

It should be noted that when realizing realizes their functions, the apparatuses provided in the above embodiments are described merely by way of example through the division of the aforementioned functional modules. In practical applications, the above functions may be allocated to and completed by different functional modules as needed. That is, the internal structure of the device may be divided into different functional modules to accomplish all or part of the functions described above.

With regard to the apparatuses in the above embodiments, the specific implementations in which various modules perform operations have been described in detail in the embodiments related to the methods, and will not be elaborated in detail here.

Referring to FIG. 9, FIG. 9 is a block diagram of a communication device provided by an embodiment of the present application. The communication device 900 may include a processor 901, a receiver 902, a transmitter 903, a memory 904, and a bus 905.

The processor 901 includes one or more processing cores, and performs various functional applications and information processing by executing software programs and modules.

The receiver 902 and the transmitter 903 may be implemented as a communication component, which may be a communication chip. The communication chip may also be referred to as a transceiver. The memory 904 is connected to the processor 901 via the bus 905. The memory 904 may be configured to store a computer program, and the processor 901 is configured to execute the computer program to implement various operations in the method embodiments described above.

Further, the memory 904 may be implemented by any type of volatile or non-volatile storage device, including, but not limited to, a magnetic or optical disk, an electrically erasable programmable read-only memory, an erasable programmable read-only memory, a static ready-to-access memory, a read-only memory, a magnetic memory, a flash memory, a programmable read-only memory, or a combination thereof.

In an exemplary solution, when the communication device 900 is implemented as the terminal device described above, the receiver 902 and the processor 901 execute the computer program so that the communication device implements various operations performed by the terminal device in the method shown in any one of FIG. 3, FIG. 4, or FIG. 6.

In an exemplary solution, when the communication device 900 is implemented as the network device described above, the transmitter 903 and the processor 901 execute the computer program so that the communication device implements various operations performed by the network device in the method shown in any one of FIG. 3, FIG. 4, or FIG. 6.

An embodiment of the present application also provides a computer-readable storage medium, having stored therein a computer program, which is loaded and executed by a processor to implement all or part of the operations performed by the terminal device or the network device in the method shown in FIG. 3, FIG. 4, or FIG. 6 as described above.

The present application also provides a chip for running in a communication device to cause the communication device to perform all or part of the operations performed by the terminal device or the network device in the method shown in FIG. 3, FIG. 4 or FIG. 6 as described above.

The present application also provides a computer program product, the computer program product or computer program including computer instructions stored in a computer readable storage medium. A processor of the communication device reads the computer instructions from the computer-readable storage medium, and the processor executes the computer instructions to cause the communication device to perform all or part of the operations performed by the terminal device or the network device in the method shown in FIG. 3, FIG. 4 or FIG. 6 as described above.

The present application also provides a computer program, which is executed by a processor of a communication device to implement all or part of the operations executed by the terminal device or the network device in the method shown in FIG. 3, FIG. 4, or FIG. 6 as described above.

Those skilled in the art should recognize that in one or more of the examples described above, the functions described in the embodiments of the present application may be implemented in hardware, software, firmware, or any combination thereof. When implemented in software, these functions may be stored in a computer readable medium or transmitted as one or more instructions or codes on a computer readable medium. The computer-readable medium includes a computer storage medium and communication medium, where communication medium includes any medium that facilitates transfer of a computer program from one place to another. The storage medium may be any available medium accessible by a general-purpose or special-purpose computer.

The foregoing are merely preferable embodiments of the present application and are not intended to limit the present application. All modifications, replacements and improvements made within the spirit and principles of the disclosure shall fall within the scope of protection of the disclosure.

## Claims

1. A communication method, performed by a terminal device, the method comprising:
accessing a first subsystem in a communication system, the communication system comprising a master system and two or more subsystems, the first subsystem being one of the two or more subsystems, the two or more subsystems each corresponding to a respective service and/or capability, and the master system being to provide common capabilities and/or resources for the two or more subsystems;
wherein the two or more subsystems have different synchronization configurations and/or access configurations.

2. The method of claim 1, wherein in a case where the two or more subsystems have different synchronization configurations, synchronization signals indicated by the synchronization configurations of the two or more subsystems have different resource positions.

3. The method of claim 2, wherein the synchronization signals indicated by the synchronization configurations of the two or more subsystems have different frequency domain resource positions.

4. The method of claim 2 or 3, wherein accessing the first subsystem in the communication system comprises:
receiving a synchronization signal of the first subsystem at a resource position of the synchronization signal of the first subsystem.

5. The method of any one of claims 1 to 4, wherein in a case where the two or more subsystems have different synchronization configurations, the synchronization configurations of the two or more subsystems indicate different synchronization signals.

6. The method of claim 5, wherein at least one of the following for the two or more sub-systems is different: synchronization signal sequences, scrambling modes for the synchronization signal sequences, or coding modes for the synchronization signal sequences.

7. The method of any one of claims 1 to 6, wherein broadcast information for the two or more subsystems are different.

8. The method of claim 7, wherein the broadcast information is used to indicate a subsystem corresponding to a synchronization signal associated with the broadcast information.

9. The method of any one of claims 1 to 8, wherein synchronization signals of the two or more subsystems have independently configured synchronization signal configuration information; and
the synchronization signal configuration information comprises:
a transmission period of a synchronization signal, and/or a number of synchronization signal blocks in a synchronization signal set;
wherein the synchronization signal set comprises synchronization signal blocks used for a corresponding subsystem in different beam directions.

10. The method of any one of claims 1 to 9, further comprising:
acquiring, through the first subsystem, subsystem configuration information for other subsystems in the communication system other than the first subsystem.

11. The method of claim 10, wherein the subsystem configuration information comprises one or more of the following:
a cell identity (ID), an initial bandwidth part (BWP), and a system message.

12. The method of claim **1,** wherein accessing the first subsystem in the communication system comprises:
receiving a synchronization signal corresponding to the master system;
receiving a broadcast message for the master system, after synchronizing with the master system according to the synchronization signal corresponding to the master system, wherein the broadcast message for the master system comprises configuration information of one or more subsystems in the communication system, and the one or more subsystems comprises the first subsystem; and
accessing the first subsystem based on the configuration information of the first subsystem.

13. The method of claim 12, wherein in a case where the two or more subsystems have different access configurations, the configuration information of the one or more subsystems includes random access configuration information of the one or more subsystems.

14. The method of claim 13, wherein one or more of the following information in the random access configuration information of the one or more subsystems are different:
a time domain position of a random access channel (PRACH);
a frequency domain position of PRACH; and
a random access preamble.

15. The method of any one of claims 1 to 14, wherein a subsystem in which the terminal device operates is determined by a network device according to at least one of the following:
a service type of a radio resource control (RRC) connection established between the terminal device and a network;
a radio bearer established between the terminal device and a network; or
parameters of the radio bearer.

16. The method of claim 15, further comprising:
receiving information of the subsystem in which the terminal device operates indicated by the network device;
wherein the information of the subsystem in which the terminal device operates comprises one or more of the following:
a BWP corresponding to the subsystem; or
a configuration parameter for B WP.

17. The method of claim 15 or 16, wherein there is a correspondence between the subsystem in which the terminal device operates and a radio bearer.

18. The method of claim 17, further comprising:
receiving a first switching indication from the network device in a case where the radio bearer between the terminal device and the network device changes; and
performing switching of the subsystem in which the terminal device operates based on the first switching indication.

19. The method of claim 18, wherein receiving the first switching indication from the network device in a case where the radio bearer between the terminal device and the network device changes comprises:
receiving the first switching indication from the network device in a case where the radio bearer between the terminal device and the network device is switched from a first radio bearer to a second radio bearer, wherein the first radio bearer corresponds to a second subsystem, and the second radio bearer corresponds to a third subsystem; and
wherein performing switching of the subsystem in which the terminal device operates based on the first switching indication comprises:
switching, based on the first switching indication, the subsystem in which the terminal device operates from the second subsystem to the third subsystem.

20. The method of claim 16, wherein receiving the information of the subsystem in which the terminal device operates indicated by the network device comprises:
receiving the information of the subsystem in which the terminal device operates indicated by the network device using a parameter of a radio bearer between the terminal device and the network device.

21. The method of any one of claims 15 to 20, further comprising:
sending a service establishment request to the network device, wherein the service setup request is used for the network device to perform switching of the subsystem in which the terminal device operates based on a service requested to be established by the service establishment request.

22. The method of claim 21, wherein sending the service establishment request to the network device comprises:
sending the service establishment request to the network device through a non-access stratum (NAS) signaling;
sending the service establishment request to the network device through a protocol data unit (PDU) session setup signaling;
sending the service establishment request to the network device during a PDU session setup procedure;
sending the service establishment request to the network device through a PDU session modification signaling;
sending the service establishment request to the network device in a PDU session modification procedure.

23. The method of any one of claims 15 to 22, further comprising:
performing switching of the subsystem in which the terminal device operates according to a connection status of the terminal device.

24. The method of claim 23, wherein the connection status comprises:
an idle state, an inactive state, or a connected state.

25. The method of claim 23 or 24, further comprising:
activating a capability set of the terminal device according to a switched subsystem in which the terminal device operates.

26. The method of any one of claims 15 to 25, wherein there is a correspondence between the subsystem in which the terminal device operates and a BWP.

27. The method of claim 26, wherein the correspondence between the subsystem in which the terminal device operates and the BWP is determined based on a capability set of the terminal device.

28. The method of claim 26 or 27, wherein
in a case where BWP switching for the terminal device occurs, the subsystem in which the terminal device operates is switched to a subsystem corresponding to a new BWP.

29. The method of claim 28, wherein
the BWP switching for the terminal device is indicated by the network device through an RRC signaling, an MAC layer signaling, or a physical layer signaling;
or,
the BWP switching for the terminal device is performed by the terminal device according to a specified trigger condition.

30. The method of any one of claims 1 to 29, further comprising:
when performing mobility measurement, measuring one or more cells among a first cell corresponding to a second subsystem, a second cell corresponding to the second subsystem, and a third cell corresponding to the master system in the communication system,
wherein the second subsystem is a subsystem in which the terminal device operates, the first cell is a cell currently accessed by the terminal device, and the second cell and the third cell are neighboring cells of the first cell.

31. The method of any one of claims 1 to 30, further comprising:
in a case of maintaining connection with the first subsystem, accessing the master system and/or accessing one or more subsystems other than the first subsystem.

32. A communication method, performed by a network device, the method comprising:
accepting access of a terminal device to a first subsystem in a communication system, the communication system comprising a master system and two or more subsystems, the first subsystem being one of the two or more subsystems, the two or more subsystems each corresponding to a respective service and/or capability, and the master system being to provide common capabilities and/or resources for the two or more subsystems,
wherein the two or more subsystems have different synchronization configurations and/or access configurations.

33. The method of claim 32, wherein in a case where the two or more subsystems have different synchronization configurations, synchronization signals indicated by the synchronization configurations of the two or more subsystems have different resource positions.

34. The method of claim 33, wherein the synchronization signals indicated by the synchronization configurations of the two or more subsystems have different frequency domain resource positions.

35. The method of claim 33 or 34, wherein accepting access of the terminal device to the first subsystem in the communication system comprises:
sending a synchronization signal of the first subsystem at a resource position of the synchronization signal of the first subsystem.

36. The method of any one of claims 32 to 35, wherein in a case where the two or more subsystems have different synchronization configurations, the synchronization configurations of the two or more subsystems indicate different synchronization signals.

37. The method of claim 36, wherein at least one of the following for the two or more sub-systems is different: synchronization signal sequences, scrambling modes for the synchronization signal sequences, or coding modes for the synchronization signal sequences.

38. The method of any one of claims 32 to 37, wherein broadcast information for the two or more subsystems are different.

39. The method of claim 38, wherein the broadcast information is used to indicate a subsystem corresponding to a synchronization signal associated with the broadcast information.

40. The method of any one of claims 32 to 39, wherein synchronization signals of the two or more subsystems have independently configured synchronization signal configuration information, and
the synchronization signal configuration information comprises:
a transmission period of a synchronization signal, and/or a number of synchronization signal blocks in a synchronization signal set;
wherein the synchronization signal set comprises synchronization signal blocks used for a corresponding subsystem in different beam directions.

41. The method of any one of claims 32 to 40, further comprising:
sending, through the first subsystem, subsystem configuration information of other subsystems in the communication system other than the first subsystem to the terminal device.

42. The method of claim 41, wherein the subsystem configuration information comprises one or more of the following:
a cell identity (ID), an initial bandwidth part (BWP), and a system message.

43. The method of claim 32, wherein accepting access of the terminal device to the first subsystem in the communication system comprises:
sending a synchronization signal corresponding to the master system and a broadcast message for the master system, wherein the broadcast message for the master system comprises configuration information of one or more subsystems in the communication system, and the one or more subsystems comprise the first subsystem; and
accepting access of the terminal device to the first subsystem based on the configuration information of the first subsystem.

44. The method of claim 43, wherein in a case where the two or more subsystems have different access configurations, the configuration information of the one or more subsystems comprises random access configuration information of the one or more subsystems.

45. The method of claim 44, wherein one or more of the following information in the random access configuration information of the one or more subsystems are different:
a time domain position of a random access channel (PRACH);
a frequency domain position of PRACH; and
a random access preamble.

46. The method of any one of claims 32 to 45, wherein a subsystem in which the terminal device operates is determined by the network device according to at least one of the following:
a service type of a radio resource control (RRC) connection established between the terminal device and a network;
a radio bearer established between the terminal device and a network; or
parameters of the radio bearer.

47. The method of claim 46, further comprising:
indicating information of the subsystem in which the terminal device operates to the terminal device,
wherein the information of the subsystem in which the terminal device operates comprises one or more of the following:
a BWP corresponding to the subsystem; or
a configuration parameter for BWP.

48. The method of claim 46 or 47, wherein there is a correspondence between a subsystem in which the terminal device operates and a radio bearer.

49. The method of claim 48, further comprising:
sending a first switching indication to the terminal device in a case where the radio bearer between the terminal device and the network device changes, wherein the first switching indication is used for indicating performing switching of the subsystem in which the terminal device operates.

50. The method of claim 49, wherein sending the first switching indication to the terminal device in a case where the radio bearer between the terminal device and the network device changes comprises:
sending the first switching indication to the terminal device in a case where the radio bearer between the terminal device and the network device is switched from a first radio bearer to a second radio bearer, wherein the first radio bearer corresponds to a second subsystem, the second radio bearer corresponds to a third subsystem, and the first switching indication is used for indicating the terminal device to switch the subsystem in which it operates from the second subsystem to the third subsystem.

51. The method of claim 47, wherein indicating the information of the subsystem in which the terminal device operates to the terminal device comprises:
indicating the information of the subsystem in which the terminal device operates to the terminal device through a parameter of a radio bearer between the terminal device and the network device.

52. The method of any one of claims 46 to 51, further comprising:
receiving a service establishment request sent by the terminal device; and
performing switching of the subsystem in which the terminal device operates based on a service that is requested to be established by the service establishment request.

53. The method of claim 52, wherein receiving the service establishment request sent by the terminal device comprises:
receiving the service establishment request that is sent by the terminal device through a non-access stratum (NAS) signaling;
receiving the service establishment request that is sent by the terminal device through a protocol data unit (PDU) session setup signaling;
receiving the service establishment request that is sent by the terminal device during a PDU session setup procedure;
receiving the service establishment request sent by the terminal device through a PDU session modification signaling;
receiving the service establishment request sent by the terminal device during a PDU session modification procedure.

54. The method of any one of claims 46 to 53, wherein there is a correspondence between the subsystem in which the terminal device operates and a BWP.

55. The method of claim 54, wherein the correspondence between the subsystem in which the terminal device operates and the BWP is determined by a capability set of the terminal device.

56. The method of claim 54 or 55, wherein
in a case where BWP switching for the terminal device occurs, the subsystem in which the terminal device operates is switched to a subsystem corresponding to a new BWP.

57. The method of claim 55, wherein
the BWP switching for the terminal device is indicated by the network device through an RRC signaling, an MAC layer signaling or a physical layer signaling,
or,
the BWP switching for the terminal device is performed by the terminal device according to a specified trigger condition.

58. The method of any one of claims 32 to 57, further comprising:
in a case where the terminal device maintains connection with the first subsystem, accepting access of the terminal device to the master system and/or accepting access of the terminal device to one or more subsystems other than the first subsystem.

59. A communication apparatus, comprising:
an accessing module, configured to access a first subsystem in a communication system, the communication system comprising a master system and two or more subsystems, the first subsystem being one of the two or more subsystems, the two or more subsystems each corresponding to a respective service and/or capability, and the master system being to provide common capabilities and/or resources for the two or more subsystems,
wherein the two or more subsystems have different synchronization configurations and/or access configurations.

60. A communication apparatus, comprising:
an accessing module, configured to accept access of a terminal device to a first subsystem in a communication system, the communication system comprising a master system and two or more subsystems, the first subsystem being one of the two or more subsystems, the two or more subsystems each corresponding to a respective service and/or capability, and the master system being to provide common capabilities and/or resources for the two or more subsystems,
wherein the two or more subsystems have different synchronization configurations and/or access configurations.

61. A terminal device, comprising a processor, a memory and a transceiver, wherein
the memory has a computer program stored therein, and the processor executes the computer program to cause the terminal device to implement the communication method of any one of claims 1 to 31.

62. A network device, comprising a processor, a memory and a transceiver, wherein
the memory has a computer program stored therein, and the processor executes the computer program to cause the network device to implement the communication method of any one of claims 32 to 58.

63. A computer storage medium, comprising a computer program that, when executed by a processor of a communication device, causes the communication device to implement the method of any one of claims 1 to 58.

64. A chip, for operating in a communication device to cause the communication device to perform the communication method of any one of claims 1 to 58.

65. A computer program product, comprising computer instructions stored in a computer readable storage medium, wherein a processor of a communication device reads the computer instructions from the computer-readable storage medium and executes the computer instructions to cause the communication device to perform the communication method of any one of claims 1 to 58.

66. A computer program, which is executed by a processor of a communication device to cause the communication device to implement the communication method of any one of claims 1 to 58.
